(19) **Europäisches Patentamt / European Patent Office / Office européen des brevets**

(11) **EP 1 746 486 B1**

(12) **FASCICULE DE BREVET EUROPEEN**

(45) Date de publication et mention
de la délivrance du brevet:
**16.12.2009 Bulletin 2009/51**

(51) Int Cl.:
**G06F 3/042** *(2006.01)* **G06T 7/20** *(2006.01)*

(21) Numéro de dépôt: **06291105.2**

(22) Date de dépôt: **04.07.2006**

(54) **Procédé de détection de déplacement d'une entité pourvue d'un capteur d'images et dispositif pour le mettre en oeuvre**

Verfahren zur Bewegungsmeldung einer Einheit, die mit einem Bildsensor versehen ist, und Vorrichtung zur Umsetzung dieses Verfahrens

Process for detecting movement of an entity fitted with an image sensor and a device for implementing it

(84) Etats contractants désignés:
**DE FR GB IT**

(30) Priorité: **05.07.2005 FR 0507169**

(43) Date de publication de la demande:
**24.01.2007 Bulletin 2007/04**

(73) Titulaire: **STMicroelectronics SA**
**92120 Montrouge (FR)**

(72) Inventeur: **Mellot, Pascal**
**38250 Lans en Vercors (FR)**

(74) Mandataire: **Vignesoult, Serge L. M. et al**
**Cabinet Plasseraud**
**52, rue de la Victoire**
**75440 Paris Cedex 09 (FR)**

(56) Documents cités:
**EP-A- 1 283 493 EP-A- 1 361 541**
**US-A1- 2004 100 444 US-B1- 6 256 016**

**Description**

La présente invention est relative aux procédés d'estimation de mouvement adaptés pour traiter une séquence d'images fournies, directement ou indirectement, par un capteur d'images en mouvement, afin par exemple de détecter le mouvement d'une entité pourvue de ce capteur d'images.

Ainsi, la présente invention est particulièrement adaptée pour une souris optique reliée à un ordinateur dans les systèmes informatiques.

De tels traitements d'images ont pour objectif de détecter des mouvements de la souris afin de les retranscrire sous la forme d'un mouvement de curseur sur un écran d'ordinateur. On détecte généralement le mouvement de la souris optique sur la base d'informations captées par un capteur vidéo ou un autre type de capteur qui est fixé sur la souris optique.

De tels capteurs fournissent un signal numérique sous la forme d'une séquence d'images captées lors du déplacement de la souris. Ce signal numérique est alors traité afin d'en déduire le mouvement de la souris.

Généralement, on déplace la souris sur une surface adaptée et le capteur vidéo fixé sur la souris capture des images de cette surface pendant son déplacement. Le déplacement de la souris peut alors être reconstruit à partir des positions relatives d'objets dans les images capturées successives. Ainsi, à partir de ce déplacement, on en déduit le déplacement qui peut être donné au curseur représentant le mouvement de la souris sur l'écran de l'ordinateur.

Certains traitements d'images de ce type s'avèrent être complexe. Ils peuvent en effet requérir des calculs puissants et de ce fait coûteux en temps et/ou en capacité de calculs, et en consommation d'énergie, posant également des problèmes de dissipation de la chaleur.

Afin de rendre l'affichage du curseur de la souris optique plus facilement réalisable, il est avantageux d'appliquer un procédé d'estimation de mouvement.

Un tel procédé permet d'estimer le mouvement d'un bloc de pixels donné entre deux images qui se suivent.

Certains procédés de ce type sont utilisés dans un autre domaine technique qui est celui de la compression de flux de vidéo. On connaît notamment une méthode décrite dans le document 'Complexity Comparison of fast block-matching estimation algorithms' de Yilong Liu et Soontorn Oraintara.

Dans le domaine de la détection de déplacement d'une entité, ces procédés sont basés sur une association d'un vecteur de mouvement à chacune des images traitées. Un tel vecteur a une composante verticale et une composante horizontale. Il représente le mouvement de la souris d'une image à l'autre.

Ainsi, dans un tel contexte, le mouvement de tous les pixels de chaque image à traiter peut être représenté par un seul vecteur de mouvement.

Ce type de dispositif est soumis à des contraintes techniques spécifiques, telles que notamment une contrainte temporelle. En effet, le traitement de telles images doit être effectué dans un temps très court afin que le mouvement de la souris puisse être retranscrit sur l'écran de l'ordinateur de manière quasi instantanée pour l'utilisateur. Une autre contrainte très importante de ce type de dispositif est le coût de production.

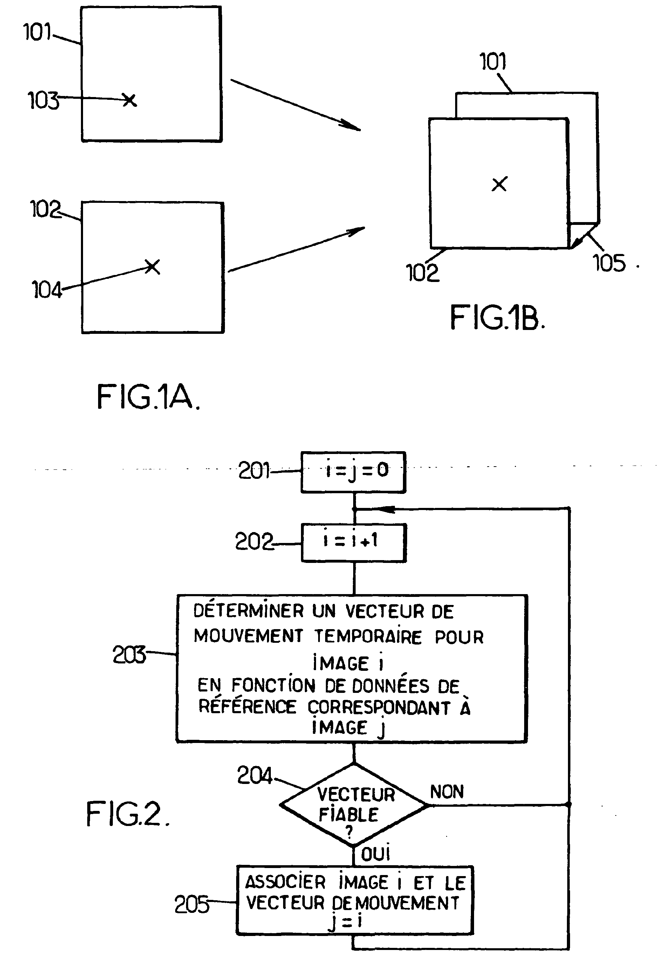

Les figures 1-A et 1-B illustrent une définition d'un vecteur de mouvement. Sur la figure 1-A, une séquence de deux images est représentée, une première image 101 est suivie d'une seconde image 102. La détection de déplacement de la souris est basée sur la position relative de certains repères compris dans les différentes images captées. L'image 101 comprend un repère en position 103 et l'image 102 comprend le même repère en position 104. Ainsi, on en déduit le déplacement de la souris optique à partir de sa position par rapport à ce repère.

Sur la figure 1-B, les images 101 et 102 sont superposées de telle sorte que les positions respectives du repère coïncident. Le vecteur de mouvement correspondant au déplacement de la souris dans un ce contexte est représenté par la flèche 105. Ses composantes suivant l'horizontale et suivant la verticale sont nommées X et Y. Ainsi, le mouvement de la souris entre l'image 101 et l'image 102 peut être représenté dans la suite par le vecteur de mouvement 105. On peut ainsi associer à l'image 101 le vecteur de mouvement 105 qui permet de retrouver la position de la souris dans l'image 102 suivante.

Afin d'estimer le mouvement de la souris associé dans une image courante, c'est-à-dire en cours de traitement, on se base généralement sur des vecteurs de mouvement précédemment associés à des images traitées précédentes dans la séquence d'images captées par la souris. Puis, à partir de tels vecteur de mouvement, on génère des vecteurs candidats, c'est-à-dire des vecteurs qui sont susceptibles de représenter le mouvement de la souris entre deux images traitées successives. Ensuite, relativement à ces vecteurs candidats, on effectue des calculs de corrélation de position de la souris, dont des exemples sont bien connus de l'homme du métier. On sélectionne alors le vecteur candidat pour lequel on calcule la plus grande corrélation. Ce dernier est ensuite associé à l'image courante.

Les termes « image traitée » font référence à des images auxquelles un vecteur de mouvement a été associé.

Dans un tel contexte, en général, un calcul de corrélation relatif à un vecteur de mouvement est fondé sur une comparaison des valeurs de pixels d'un bloc de pixels dans une image donnée avec les valeurs de pixels pointés dans l'image suivante par le vecteur de mouvement associé à l'image donnée à partir des pixels du bloc de pixels de l'image donnée.

Par conséquent, plus la qualité des images numériques de la séquence d'images est élevée, meilleure est la fiabilité des résultats de ce type de calcul de corrélation et meilleure est la convergence de ce type de dispositif, quelque soit le procédé d'estimation de mouvement utilisé.

On peut obtenir des images numériques de plus ou moins bonne qualité en fonction des méthodes de traitement d'image utilisées. On connaît ainsi une méthode d'interpolation bilinéaire de pixels. Une telle méthode, basée sur des calculs mathématiques relativement simples, permet d'obtenir une certaine qualité de l'image à un coût acceptable. Toutefois, un procédé d'estimation de mouvement appliqué à de telles images peut diverger dans certaines conditions. Notamment, lorsque la souris se déplace lentement par rapport à la vitesse des images capturées.

On connaît d'autres méthodes de traitement d'images qui permettent d'obtenir des images de meilleure qualité, comme notamment une méthode d'interpolation bicubique. En appliquant un procédé d'estimation de mouvement sur des images obtenues avec une méthode de ce type, on améliore la convergence de tels procédés et permet d'éviter certains effets de distorsion. En effet, les calculs de corrélation tels que ceux précités fournissent alors de des résultats plus fiables, puisqu'ils sont appliqués sur des images de meilleure qualité numérique. Toutefois, de telles méthodes requièrent de lourds calculs et sont donc coûteuses.

Le document US 6,256,016 B1 décrit un dispositif de pointage optique et le procédé associé de détection de mouvement de ce dispositif. Pour déterminer le vecteur de mouvement associé à une image courante, on compare cette image à une image de référence. Si le vecteur déterminé est non nul, l'image courante devient l'image de référence. Dans le cas contraire, l'image suivante devient l'image courante et on compare cette nouvelle image à l'image de référence qui n'a pas changé.

Le document US 2004/0100444 A1 décrit également un dispositif de pointage optique et le procédé associé de détection de mouvement de ce dispositif. Un vecteur de mouvement associé à une image courante est déterminé pour chaque axe, en comparant cette image à une image de référence pour chacun des axes. L'image courante devient image de référence pour un axe dès lors que le vecteur de mouvement selon cet axe n'est pas nul.

La présente invention vise à proposer une alternative à ces méthodes connues.

Un premier aspect de l'invention propose ainsi un procédé de détection de mouvement d'une souris optique pourvue d'un capteur de séquence d'images à traiter, ledit procédé comprenant les étapes suivantes :

/a/ déterminer un vecteur de mouvement temporaire relativement à une image courante en fonction de données de référence comprenant une image précédente et un vecteur de mouvement associé à ladite image précédente ;

/b/ si le vecteur de mouvement temporaire ne vérifie pas un critère de fiabilité, répéter l'étape /a/ relativement à une image suivante, sur la base des mêmes dites données de référence ; sinon

/c/ associer le vecteur de mouvement temporaire à l'image courante.

Grâce à de telles dispositions, seul un vecteur de mouvement qui vérifie un critère de fiabilité peut être associé à une image courante, c'est-à-dire en cours de traitement, dans la séquence d'images captées. On peut alors avantageusement se baser sur une telle association pour la suite du procédé. De cette manière, on obtient un procédé d'estimation de mouvement présentant une meilleure convergence, sans avoir recours à un traitement des images visant à en améliorer leur qualité numérique, tel que par exemple une interpolation bicubique de pixels. On peut ainsi notamment réaliser des systèmes à souris optique qui sont fiables et peu coûteux. On pallie ainsi un niveau de qualité numérique d'images relativement faible en sélectionnant un vecteur de mouvement sur un ou plusieurs critères de fiabilité avant de l'associer à une image, et donc, avant de traiter la ou les images suivantes dans la séquence d'images captée.

Dans ce type de procédé d'estimation de mouvement, on détermine un vecteur de mouvement en fonction de données relatives à une image précédente dans la séquence d'images, ces données étant alors considérées comme des données de référence et étant utilisées pour déterminer un vecteur de mouvement correspondant à l'image courante. Une telle étape correspond à l'étape /a/ d'un procédé selon la présente invention.

On note que le procédé selon la présente invention peut avantageusement être appliqué quelque soit la méthode utilisée à l'étape /a/ pour déterminer un vecteur de mouvement correspondant à une image courante.

De préférence, un vecteur de mouvement temporaire vérifie le critère de fiabilité si sa norme est supérieure à une valeur de seuil. Ainsi, tant qu'un vecteur de mouvement temporaire déterminé relativement à une image courante ne présente pas une norme supérieure à la valeur de seuil, il n'est pas associé à cette image courante. De cette façon, il n'est pas pris en compte dans la suite du procédé d'estimation de mouvement. On élime ainsi les vecteurs de mouvement qui pourraient amener le procédé à diverger.

Il en est ainsi des vecteurs de mouvement qui ont une norme sensiblement inférieure au pixel. En effet, lorsqu'on applique un tel vecteur de mouvement à une image de qualité relativement faible et que l'on effectue un calcul de corrélation correspondant avec une image suivante, on est amené à déterminer un vecteur de mouvement sur la base de critères qui ne sont pas fiables. Par conséquent, ce type de procédé peut diverger si on se base sur une association d'une image à un tel vecteur de mouvement.

De préférence, les données de référence comprennent d'une part, un vecteur de mouvement associé à une image précédente et, d'autre part, l'image précédente.

Dans un mode de réalisation de la présente invention, après l'étape /c/, on réalise les étapes /a/ et /b/, relativement à une image courante suivant l'image courante précédente dans la séquence d'images en fonction de données de référence correspondantes à l'image courante précédente.

Dans un mode de réalisation, l'étape /a/ comprend les étapes consistant à :

/1/ générer k vecteurs candidats en ajoutant, à un vecteur de mouvement de référence, respectivement k vecteurs de recherche ;
/2/ sélectionner un vecteur de mouvement parmi lesdits k vecteurs candidats en fonction d'une règle de sélection donnée ;
/3/ répéter m fois les deux étapes précédentes, ledit vecteur de mouvement de référence étant d'une part, pour une première itération de l'étape /1/, un vecteur de référence initial sélectionné parmi un ensemble de vecteurs comprenant au moins un vecteur de mouvement associé à une image traitée précédente et étant d'autre part, pour les m répétitions de l'étape /1/, le vecteur de mouvement sélectionné à l'étape /2/ précédant ladite étape /1/ et obtenir un vecteur de mouvement temporaire ;

m étant un entier supérieur ou égal à 1 et k étant un entier strictement supérieur à 1.

Une direction d'un premier et d'un deuxième vecteurs de recherche peut être horizontale, et une direction d'un troisième et d'un quatrième vecteurs de recherche peut être verticale ; les premier et deuxième vecteurs de recherche d'une part, et les troisième et quatrième vecteurs de recherche d'autre part, étant de sens respectifs opposés.

Dans un mode de réalisation, une amplitude des vecteurs de recherche correspondant à la première itération de l'étape /1/ est déterminée en sélectionnant la plus grande valeur parmi une valeur de seuil donnée, une composante horizontale divisée par deux et une composante verticale divisée par deux du vecteur de mouvement associé à l'image traitée précédente.

Une amplitude des vecteurs de recherche correspondant à une répétition de l'étape /1/ peut être déterminée en sélectionnant la plus grande valeur parmi une valeur de seuil donnée, une composante horizontale divisée par deux et une composante verticale divisée par deux du vecteur de recherche correspondant au vecteur de mouvement sélectionné à l'étape /2/ précédant l'étape /1/.

La règle de sélection appliquée à l'étape /2/ est basée sur un calcul de corrélation d'un premier bloc de pixels dans l'image en cours de traitement et d'un second bloc de pixels dans l'image traitée précédente à partir duquel le vecteur candidat pointe le premier bloc de pixels, le vecteur candidat permettant une corrélation la plus élevée étant sélectionné.

L'ensemble de vecteurs de mouvement parmi lesquels le vecteur de mouvement de référence est sélectionné pour la première itération de l'étape /1/ peut en outre comprendre le vecteur nul.

Un deuxième aspect de la présente invention propose un dispositif de détection de déplacement d'une entité pourvue d'un capteur mobile comprenant :

- une unité de détermination de vecteur de mouvement temporaire adaptée pour recevoir en entrée une image courante et des données de référence et pour fournir en sortie un vecteur de mouvement temporaire relativement à ladite image courante, ledit vecteur de mouvement étant déterminé en fonction desdites données de référence ;
- une unité de contrôle adaptée pour recevoir un vecteur de mouvement temporaire fourni par ladite unité de détermination, et pour, d'une part, stocker dans une mémoire l'image courante associée au vecteur de mouvement temporaire si ledit vecteur de mouvement temporaire vérifie un critère de fiabilité, et, d'autre part, fournir une autre image courante à l'unité de détermination via une unité de sélection d'image si le vecteur de mouvement temporaire ne vérifie pas le critère de fiabilité, ladite autre image courante correspondant à l'image suivante dans la séquence d'images à traiter;
- ladite mémoire adaptée pour stocker une image et un vecteur de mouvement associé à ladite image ;
- une unité de sélection d'image adaptée pour sélectionner une image dans la séquence d'images captées et pour fournir ladite image à ladite unité de détermination; et
- une unité de sélection de données de référence adaptée pour sélectionner des données de référence comprenant l'image sélectionnée et le vecteur de mouvement associé et pour fournir lesdites données de référence sélectionnées à l'unité de détermination après chaque stockage de données dans la mémoire.

Ces unités peuvent être réalisées sous la forme matérielle et/ou logicielle.

L'unité de contrôle peut décider que le vecteur de mouvement temporaire vérifie le critère de fiabilité si une norme du vecteur de mouvement temporaire est supérieure à une valeur de seuil.

De préférence, l'unité de sélection de données de référence est adaptée pour sélectionner des données de référence comprenant l'image et le vecteur de mouvement associé et pour fournir de telles données de référence sélectionnées à l'unité de détermination après chaque stockage de données dans la mémoire.

Ainsi, chaque fois que des données relatives à une image associée à un vecteur de mouvement temporaire qui vérifie le critère de fiabilité sont stockées dans la mémoire, ces informations sont fournies à l'unité de détermination qui reçoit également, dans ce cas là, une nouvelle image courante depuis l'unité de sélection d'image.

L'unité de sélection d'image est préférablement adaptée pour sélectionner l'image suivant l'image sélectionnée précédente.

Un troisième aspect de la présente invention propose une souris optique comprenant un capteur mobile d'images adaptée pour coopérer avec un dispositif de détection de déplacement selon le deuxième aspect de la présente invention.

Un quatrième aspect de la présente invention propose un produit « programme d'ordinateur » chargeable directement dans la mémoire interne d'un ordinateur numérique, comprenant des portions de code de logiciel pour l'exécution des étapes du procédé selon le premier aspect de la présente invention.

D'autres aspects, buts et avantages de l'invention apparaîtront à la lecture de la description d'un de ses modes de réalisation.

L'invention sera également mieux comprise à l'aide des dessins, sur lesquels :

- les figures 1-A et 1-B qui ont déjà été commentées illustrent un vecteur de mouvement dans une application de détection de mouvement d'une souris optique ;
- la figure 2 illustre les principales étapes d'un procédé d'estimation de mouvement selon un mode de réalisation de la présente invention ;
- la figure 3 illustre une application d'un procédé selon un mode de réalisation de la présente invention
- la figure 4 détaille les étapes qui sont mises en oeuvre pour déterminer un vecteur de mouvement temporaire à l'étape /a/ d'un procédé de détection de déplacement selon un mode de réalisation de la présente invention ;
- la figure 5 illustre une étape consistant à obtenir un vecteur de référence initial pour l'étape /a/ d'un procédé selon un mode de réalisation de la présente invention;
- la figure 6 illustre, à l'aide des vecteurs représentés, différentes étapes d'un procédé selon un mode de réalisation de la présente invention ;
- la figure 7 illustre un dispositif de détection de déplacement d'une entité pourvue de capteur mobile, selon un mode de réalisation de la présente invention.

La présente invention est plus particulièrement décrite dans son application aux souris optiques. Bien sûr, il est aisé d'en déduire une application à tout système dans lequel on applique un traitement de séquence d'images pour détecter des mouvements d'un capteur mobile par rapport à la surface sur laquelle il se déplace.

La figure 2 illustre les principales étapes d'un procédé d'estimation de mouvement selon un mode de réalisation de la présente invention.

Ces étapes peuvent être avantageusement appliquées relativement à chaque image captée par la souris et traitée par un procédé d'estimation de mouvement.

Pour la suite, les images de la séquence captée par la souris optique sont référencées par des index croissant suivant l'ordre de ces images au sein de la séquence.

Ainsi, à une étape 201, on initialise des indices i et j à 0, i représentant l'index de l'image courante et j représentant l'index de l'image correspondant aux données de référence en fonction desquelles on détermine un vecteur de mouvement temporaire à associer à l'image indexée i.

De préférence, des données de référence correspondant à une image donnée comprennent l'image donnée, c'est-à-dire la valeur des pixels de cette image, ainsi que le vecteur de mouvement qui lui est associée.

On note que l'objet de la présente invention n'étant pas de déterminer une méthode d'initialisation d'un procédé d'estimation de mouvement de ce type, cette étape ne sera pas décrite. Par ailleurs, l'homme du métier connaît bien certaines méthodes permettant d'initialiser ce type de procédé. On suppose donc ici que l'image indexée 0 est déjà traitée, un vecteur de mouvement y étant donc déjà associé.

A une étape 202, on incrémente l'index i, l'image courante est donc l'image indexée 1. Puis à une étape 203, on détermine un vecteur de mouvement temporaire relativement à l'image indexée 1. Cette étape est donc réalisée en fonction de données de référence correspondantes à l'image indexée 0.

L'invention couvre toute méthode ou procédé permettant de déterminer un tel vecteur de mouvement sur la base de ces données de référence et de l'image indexée 1.

Ensuite, à une étape 204, le vecteur de mouvement temporaire ainsi déterminé est contrôlé selon un critère de fiabilité. Si ce vecteur ne vérifie pas un tel critère, les étapes 202 et 203 sont alors répétées. A cet effet, on incrémente l'index de l'image courante, on considère donc l'image indexée 2, sans incrémenter l'index de l'image correspondant aux données de référence en fonction desquelles on détermine un vecteur de mouvement temporaire.

De ce fait, on détermine donc un vecteur de mouvement temporaire relativement à l'image indexée 2 sur la base des données de référence correspondantes à l'image d'index 0.

Ainsi, en se référant à une image plus lointaine dans la séquence d'images considérée, il est plus probable d'obtenir un vecteur de mouvement temporaire de norme plus importante.

Une telle méthode vise donc à augmenter la norme du vecteur de mouvement temporaire à associer à une image en cours de traitement. Cette méthode présente d'autant plus d'avantages que la vitesse de la séquence d'images est élevée par rapport au mouvement de la souris. En effet, dans un tel cas, lorsque la souris se déplace dans le même sens, entre deux images consécutives de la séquence, le vecteur de mouvement temporaire déterminé à l'étape /a/ peut avoir une norme faible, et plus les images considérées sont éloignées l'une de l'autre plus la norme d'un tel vecteur s'accroît.

Après une première répétition des étapes 202 et 203, à l'étape 204, on contrôle la fiabilité du vecteur de mouvement temporaire déterminé relativement à l'image indexée 2 en fonction des données de référence correspondant à l'image indexée 0.

On répète donc les étapes 202 et 203, en incrémentant l'index de l'image en cours de traitement, mais sans incrémenter l'index de l'image précédente à laquelle correspond les données de référence, jusqu'à ce qu'on détermine un vecteur de mouvement temporaire vérifiant ce critère de fiabilité.

Ainsi, dans un mode de réalisation de la présente invention, un vecteur de mouvement temporaire vérifie un critère de fiabilité si sa norme est supérieure à une valeur de seuil. Cette valeur de seuil peut être avantageusement une valeur de configuration. Une telle valeur de seuil peut alors être ajustée en fonction notamment de la qualité numérique des images de la séquence d'images captées.

Puis, lorsque, relativement à une image indexée p, en fonction de données de référence correspondant à l'image 0, on détermine un tel vecteur vérifiant le critère de fiabilité, on associe ce vecteur à l'image indexée p, à une étape 205.

De préférence, dans la suite du procédé selon un mode de réalisation de l'invention, on considère alors l'image indexée p+1 en fonction des données de référence correspondant à l'image indexée p.

Ainsi, un tel procédé est ensuite appliqué à l'image suivante qui devient alors l'image courante et qui est traitée par rapport à l'image traitée précédente.

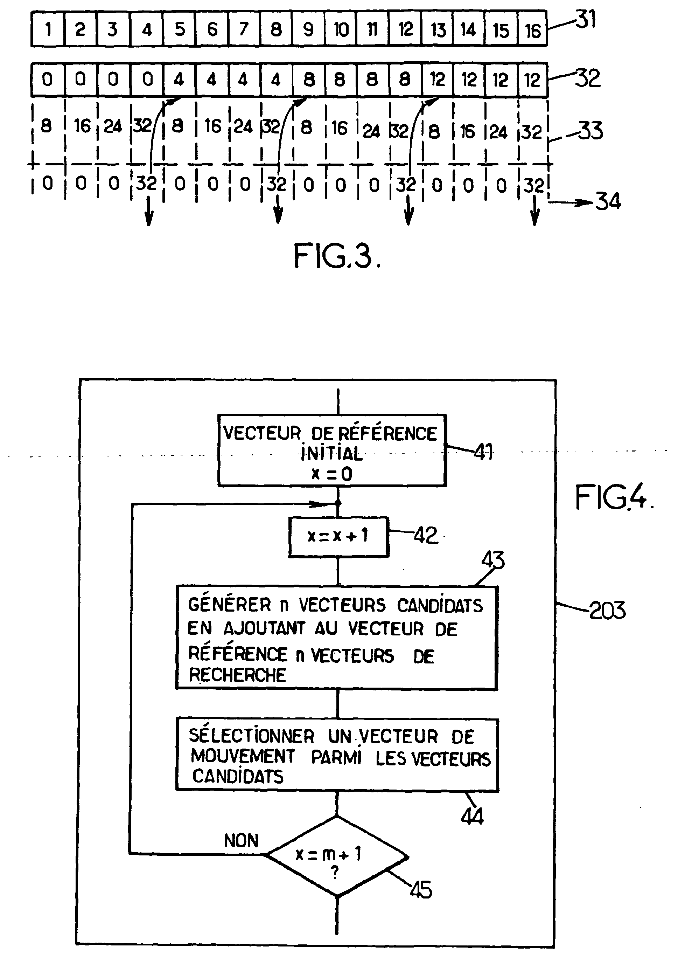

La figure 3 illustre une application d'un procédé selon un mode de réalisation de la présente invention. Cette figure illustre un cas dans lequel la souris est déplacée lentement par rapport à la vitesse des images de la séquence d'images captées. Tel est le cas lorsque la souris se déplace d'¼ de pixel entre deux images consécutives de la séquence.

Un tableau représente successivement les index des images de la séquence d'images captées qui sont traitées successivement en tant qu'image courante par un procédé selon un mode de réalisation de la présente invention.

Un tableau 32 représente les index des images correspondant aux données de référence respectivement utilisées pour traiter ainsi successivement les images de la séquence d'images listées dans le tableau 31.

Puis, un tableau 33 représente la norme des vecteurs de mouvement temporaires déterminés respectivement pour les images courantes dont l'index est dans le tableau 31 en fonction des données de référence correspondant aux images respectives dont les index sont listés dans le tableau 32. La norme est ici exprimée en 1/32 pixel.

Un vecteur de mouvement temporaire vérifie un critère de fiabilité si la norme du vecteur est supérieur ou égale au pixel.

Ainsi, dans l'exemple illustré en figure 3, on détermine relativement à l'image courante indexée 1 en fonction de données de référence correspondant à l'image indexée 0, un vecteur de mouvement temporaire de norme égale à 8/32 pixel. Un tel vecteur ne vérifie pas le critère de fiabilité tel qu'énoncé ci-dessus.

Par conséquent, on répète l'étape 203 relativement à l'image indexée 2 en fonction des mêmes données de référence que précédemment, c'est-à-dire celles correspondant à l'image indexée 0.

Le vecteur de mouvement temporaire alors obtenu a une norme de 16/32 pixels. Ce dernier ne vérifie pas non plus le critère de fiabilité.

On répète par conséquent l'étape 203 relativement à l'image indexée 3, et cela toujours en fonction des mêmes données de référence. On détermine un vecteur de mouvement temporaire de norme égale à 24/32 pixel, qui ne vérifie toujours pas le critère de fiabilité. Puis, lorsqu'on répète l'étape 203 relativement à l'image indexée 4 en fonction des mêmes données de référence que précédemment, on détermine un vecteur de mouvement temporaire de 1 pixel qui, lui, vérifie le critère de fiabilité.

On associe alors ce vecteur à l'image indexée 4, telle qu'énoncé à l'étape 205.

Pour déterminer ensuite un vecteur de mouvement temporaire relativement à l'image indexée 5, on se base alors sur des données de référence correspondant à l'image à laquelle un vecteur de mouvement vient d'être associée, c'est à l'image indexée 4.

Puis, des étapes similaires à celles qui viennent d'être décrites sont effectuées relativement et successivement aux images indexées 5 à 8 en fonction de données de référence correspondant à l'image indexée 4.

On détermine alors un vecteur de mouvement temporaire qui vérifie le critère de fiabilité entre l'image indexée 4 et l'image indexée 8.

Par conséquent, on associe à l'image indexée 8 ce vecteur de mouvement.

Puis, on traite de manière similaire successivement les images indexées 9 à 12 par rapport à des données de référence correspondant à l'image indexée 8, à laquelle on vient d'associer un vecteur de mouvement.

On détermine un vecteur de mouvement temporaire qui vérifie le critère de fiabilité relativement à l'image indexée 12. On associe alors ce vecteur de mouvement à cette dernière image.

On répète ensuite de manière similaire successivement les mêmes étapes relativement aux images indexées 13 à 16 par rapport à des données de référence correspondant à l'image indexée 12, à laquelle on vient d'associer un vecteur de mouvement.

On détermine un vecteur de mouvement temporaire qui vérifie le critère de fiabilité relativement à l'image indexée 16. On associe alors ce vecteur de mouvement à cette dernière image.

Un tableau 34 représente les valeurs de vecteurs de mouvement stockés en mémoire et destinés à être lus par une fonction d'affichage adaptée pour transcrire le mouvement de la souris ainsi détecté sous la forme d'un mouvement d'un curseur sur l'écran d'un ordinateur. On note que seuls les vecteurs de mouvement temporaires vérifiant le critère de fiabilité sont avantageusement stockés. Par un tel stockage, la fonction d'affichage peut lire ces données de manière asynchrone.

Le procédé est simple et rapide à mettre en oeuvre et permet de sélectionner un vecteur de mouvement fiable pour les images de la séquence d'images captées par une souris.

La figure 4 illustre les étapes qui sont mises en oeuvre pour déterminer un vecteur de mouvement temporaire à l'étape /a/ d'un procédé de détection de déplacement selon un mode de réalisation de la présente invention.

Ces étapes peuvent être appliquées relativement à chaque image captée par le capteur d'images solidaires de la souris. Bien sûr, dans certaines circonstances, il peut être avantageux de ne traiter qu'une partie des images captées à l'aide de ces étapes.

Ainsi, pour une image en cours de traitement, on sélectionne en premier lieu un vecteur de mouvement de référence initial parmi un ensemble de vecteurs de mouvement. Dans un mode de réalisation de l'invention, cet ensemble comprend le vecteur de composantes nulles ainsi que le vecteur de mouvement associé à l'image précédemment traitée dans la séquence d'images captées. Puis, le vecteur de référence initial est sélectionné selon une règle qui sera détaillée plus loin.

A l'étape 41, le procédé est initialisé avec un vecteur de référence initial et on initialise un index x à 0.

Puis, à l'étape 42, on incrémente l'index x d'une unité.

Ensuite, à l'étape 43, on génère k vecteurs candidats, k étant un nombre entier strictement supérieur à 1. Ces vecteurs candidats sont générés en ajoutant au vecteur de référence initial respectivement k vecteurs de recherche. Deux de ces vecteurs peuvent être de direction horizontale et de sens opposés respectifs, alors que les deux autres sont de direction verticale et de sens respectivement opposés. Ces k vecteurs de recherche peuvent donc être avantageusement au nombre de 4. Mais on peut avoir moins ou plus selon des directions autres que la verticale et l'horizontale.

A l'étape 44, un vecteur de mouvement est sélectionné parmi les vecteurs candidats ainsi générés. Une telle sélection peut être effectuée sur la base de différents critères qui seront décrits par la suite.

On effectue m+1 fois les étapes 42, 43 et 44, m étant un entier supérieur à 1. A cet effet, à l'étape 45, on compare la valeur de l'index x à la valeur m. Dans le cas où x est inférieur à m, on effectue à nouveau les étapes 42 à 45.

Dans ce cas, à chaque répétition de l'étape 43, le vecteur de mouvement de référence est le vecteur de mouvement sélectionné à l'étape 44 qui vient d'être effectuée.

Après m répétitions des étapes 42 à 44, on a déterminé un vecteur de mouvement temporaire et on a donc réalisé l'étape 203.

La présente invention couvre toute autre méthode permettant de déterminer un vecteur de mouvement temporaire.

Tout ou partie de ces vecteurs de mouvement associés peuvent être stockés dans une mémoire. Ils peuvent ainsi être lus, de manière asynchrone, par une fonction d'affichage qui se base sur ces vecteurs pour déplacer un symbole (par exemple un curseur) sur un écran d'ordinateur dont le mouvement suit alors le mouvement de la souris optique.

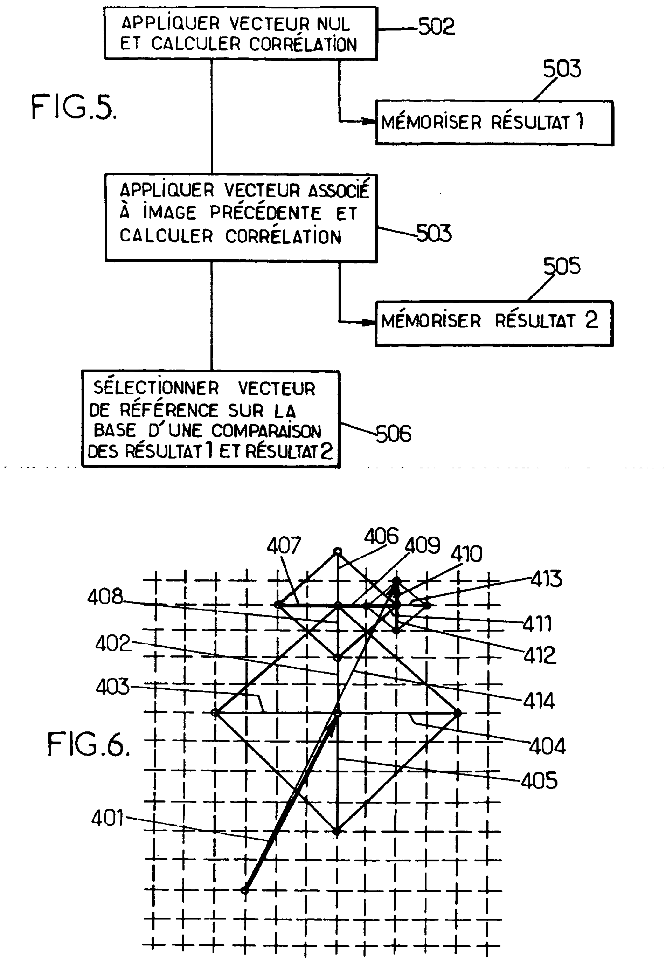

La figure 5 illustre une étape permettant d'obtenir un vecteur de référence initial dans un procédé selon un mode de réalisation.

Pour la suite, on indexe les images successives de la séquence d'images captées. En référence à la figure 5, l'image en cours de traitement est l'image indexée n, l'image précédemment traitée étant l'image indexée n-1. On note que l'image traitée précédente peut ne pas être l'image précédente dans la séquence d'images captées. En effet, dans certaines conditions, il peut être avantageux de ne pas traiter toutes les images captées de la séquence d'images.

Les images captées comprennent un nombre N de pixels chacune, ce nombre pouvant notamment être égal à 400, par exemple pour une image d'une dimension de 20 pixels sur 20 pixels.

Dans un tel mode de réalisation, l'ensemble de vecteurs de mouvement à partir duquel on sélectionne un vecteur de mouvement de référence initial comprend le vecteur nul et le vecteur de mouvement associé à l'image traitée précédente. Il convient ici de noter qu'il est possible d'adapter un tel procédé à un ensemble de vecteurs comprenant un plus grand nombre de vecteurs de mouvement.

Par ailleurs, de préférence, on définit un bloc de pixels au sein des N pixels représentant l'image n-1, et on applique les étapes suivantes aux pixels de ce bloc de pixels. On peut, par exemple, considérer un bloc de pixels de 14 pixels sur 14 pixels.

Ainsi, à l'étape 501, les N pixels de l'image n-1 précédemment traitée, et le vecteur de mouvement associé à cette image sont stockés en mémoire.

A l'étape 502, on applique le vecteur nul au bloc de pixels défini dans l'image n-1 et on effectue un calcul de corrélation entre la valeur des pixels du bloc de pixels de l'image n-1 et la valeur des pixels du bloc de pixels pointé correspondant dans l'image n. A cet effet, on peut par exemple, pour chacun des pixels de la fenêtre, calculer la différence entre la valeur de ce pixel et la valeur du pixel pointé par le vecteur nul dans l'image n. On effectue ensuite la somme des valeurs absolues des différences ainsi obtenues et on obtient un premier résultat de corrélation.

A l'étape 503, le résultat de cette corrélation est ensuite pondéré par une valeur, qui est de préférence une valeur de configuration, avant d'être stocké en mémoire. Une telle pondération est bien sûr facultative et vise à améliorer la précision d'un tel procédé. Une valeur de pondération peut être avantageusement déterminée en fonction de la vitesse des images dans la séquence d'images captées.

Puis, à l'étape 504, on applique au bloc de pixels considéré dans l'image n-1, le vecteur de mouvement déjà associé à cette image. On effectue alors un calcul de corrélation. A cet effet, de préférence, on calcule pour chacun des pixels du bloc de pixels considéré dans l'image n-1, la différence entre la valeur d'un pixel donné de l'image n-1 et la valeur du pixel correspondant dans l'image n, c'est-à-dire le pixel de l'image n pointé à partir du pixel donné par le vecteur de mouvement associé à l'image n-1.

On effectue la somme des valeurs absolues des différences et on obtient donc un second résultat de corrélation que l'on stocke en mémoire à l'étape 505.

On note que les étapes 502 et 504 peuvent être effectuées dans un ordre quelconque.

A l'étape 506, on compare le premier et le second résultats de corrélation, et sur la base de cette comparaison, on sélectionne parmi le vecteur nul et le vecteur de mouvement associé à l'image n-1, le vecteur qui permet d'obtenir la plus grande corrélation.

La figure 6 illustre, à l'aide des vecteurs représentés, différentes étapes d'un procédé selon un mode de réalisation de la présente invention. Cette représentation vectorielle est faite sur une grille de carrés qui ont chacun des côtés d'une longueur correspondant à une fraction de pixel. Une telle longueur peut par exemple être égale à $1/32^{\text{ème}}$ de la longueur d'un pixel.

Un vecteur 401 représente le vecteur de mouvement de référence initial, à partir duquel les différentes étapes du procédé selon un mode de réalisation tel qu'illustré à la figure 4 sont appliquées. Dans un mode de réalisation, le vecteur 401 est le vecteur de mouvement associé à l'image n-1. Dans l'exemple décrit, on considère que la valeur de m est égale à 2.

A la première itération de l'étape 402, l'index i est égal à 1.

Ensuite, à l'étape 403, dans l'exemple illustré à la figure 6, on génère 4 vecteurs candidats à partir du vecteur de mouvement de référence 401, de coordonnées $X_{ref}$ et $Y_{ref}$, en y ajoutant respectivement 4 vecteurs de recherche. Le premier vecteur candidat est obtenu en ajoutant au vecteur de mouvement de référence 401, un premier vecteur de recherche de composante verticale nulle et de composante horizontale déterminée en fonction d'au moins une composante du vecteur de mouvement de référence initial. L'invention couvre toute méthode permettant de déterminer une telle composante en fonction d'au moins une des composantes du vecteur de mouvement de référence.

On peut ainsi, par exemple, déterminer les coordonnées du premier vecteur de recherche, notées $X_1$ et $Y_1$, selon l'équation suivante :

$$X_1 = \text{Max} [val_{th}; \tfrac{1}{2}^* |X_{ref}|; \tfrac{1}{2}^* |Y_{ref}|]$$
$$Y_1 = 0$$

où $val_{th}$ est une valeur de seuil de préférence configurable, qui permet de garantir une certaine amplitude du vecteur de recherche, quelque soit les composantes du vecteur de mouvement de référence.

On obtient alors le premier vecteur de recherche 404.

Puis, les coordonnées du deuxième vecteur de recherche peuvent vérifier l'équation suivante :

$$X_2 = - \text{Max} [val_{th}; \tfrac{1}{2}^* |X_1| ; \tfrac{1}{2}^* |Y_1|]$$
$$Y_2 = 0$$

On obtient alors le deuxième vecteur de recherche 403.

Puis, les coordonnées du troisième vecteur de recherche peuvent vérifier l'équation suivante :

$$X_3 = 0$$
$$Y_3 = \text{Max} [val_{th}; \frac{1}{2}^* |X_2|; \frac{1}{2}^* |Y_2|)]$$

On obtient alors le troisième vecteur de recherche 402.

Puis, les coordonnées du quatrième vecteur de recherche peuvent vérifier l'équation suivante :

$$X_4 = 0$$
$$Y_4 = - \text{Max} [val_{th}, \frac{1}{2}^* |X_3| ; \frac{1}{2}^*|Y_3|)]$$

On obtient alors le quatrième vecteur de recherche 405.

On note que la valeur de seuil est préférablement prise en compte pour la détermination des composantes des vecteurs de recherche afin d'améliorer la convergence d'un tel procédé. Toutefois, dans une variante, il est possible de déterminer les vecteurs de recherche seulement à partir des coordonnées du vecteur de référence correspondant.

On obtient donc à l'issue de l'étape 403, les quatre vecteurs candidats suivants :

$$V_{cand1} = V(X_{ref,}\ Y_{ref}) + V(X_1,\ Y_1) \qquad (1)$$

$$V_{cand2} = V(X_{ref,}\ Y_{ref}) + V(X_2,\ Y_2) \qquad (2)$$

$$V_{cand3} = V(X_{ref,}\ Y_{ref}) + V(X_3,\ Y_3) \qquad (3)$$

$$V_{cand4} = V(X_{ref,}\ Y_{ref}) + V(X_4,\ Y_4) \qquad (4)$$

On effectue alors l'étape 404 visant à sélectionner un vecteur parmi ces vecteurs candidats.

A cet effet, de préférence, on réalise un calcul de corrélation relativement à chacun de ces vecteurs candidats.

On peut utiliser le calcul des sommes absolues des différences relativement à chacun de ces vecteurs candidats, comme précédemment décrit.

Le vecteur candidat présentant la meilleure corrélation est alors sélectionné. Dans l'exemple décrit, le vecteur candidat $V_{cand3}$ est sélectionné.

On réitère l'étape 402 et l'étape 403. A cette dernière étape, le vecteur de mouvement de référence considéré est avantageusement le vecteur de mouvement qui vient d'être sélectionné à l'étape 404 précédente, c'est-à-dire le vecteur $V_{cand3}$.

Puis, on génère à nouveau 4 vecteurs candidats à partir de ce nouveau vecteur de mouvement de référence et de quatre vecteurs de recherche.

On peut par exemple déterminer les coordonnées de ces vecteurs de recherche de la même façon que lors de la première itération de cette étape. On obtient alors le premier vecteur de recherche 409, le deuxième vecteur de recherche 407, le troisième vecteur de recherche 406 et enfin le quatrième vecteur de recherche 408.

Les vecteurs candidats obtenus à la deuxième itération de l'étape 403 vérifient respectivement les équations (1), (2), (3) et (4) en considérant les vecteurs de recherche 409, 407, 406 et 408.

Puis, on effectue des calculs de corrélation correspondants, de la manière telle que décrite précédemment par exemple. Puis, on sélectionne le vecteur candidat présentant la plus grande corrélation. Dans l'exemple illustré, le vecteur de mouvement $V_{cand1}$ est ainsi sélectionné.

Puis, on réitère une dernière fois les étapes 402 à 405 en considérant comme vecteur de mouvement de référence, le vecteur de mouvement que l'on vient de sélectionner à l'étape 404, $V_{cand1}$. De la même manière que précédemment indiqué, on obtient les quatre vecteurs de recherche 413, 411, 410 et 412, tels qu'illustrés à la figure 6.

On génère alors les quatre vecteurs candidats à partir du nouveau vecteur de mouvement de référence et des vecteurs de recherche correspondant qui peuvent être avantageusement déterminés comme décrit précédemment. Puis, on effectue pour la troisième fois l'étape 404 de sélection de vecteurs de mouvement parmi ces quatre vecteurs candidats. On peut utiliser à cet effet, les mêmes méthodes que celles précédemment décrites en référence aux itérations précédentes de l'étape 404.

Le nombre m étant égal à 3, on obtient alors un vecteur de mouvement temporaire correspondant au dernier vecteur de mouvement sélectionné, référencé 414.

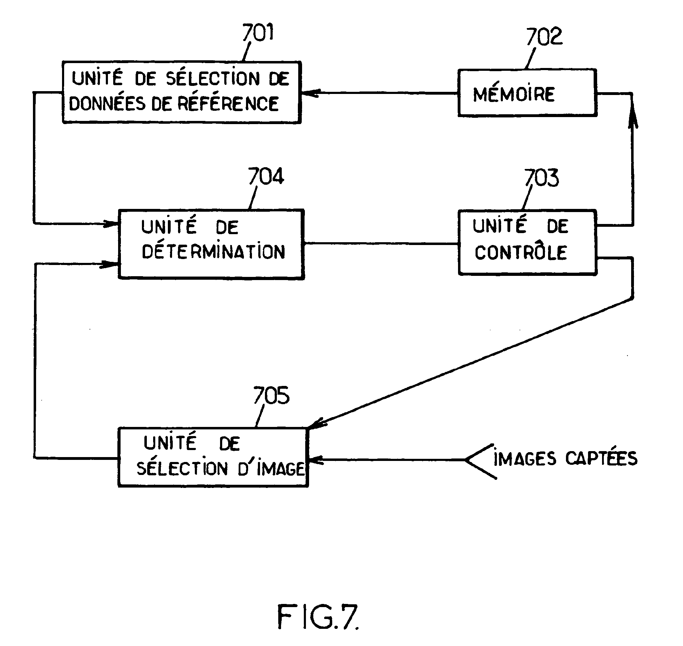

La figure 7 illustre un dispositif de détection de déplacement d'une entité pourvue d'un capteur mobile, selon un mode de réalisation de la présente invention.

Un tel dispositif comprend une unité de détermination 704 de vecteur de mouvement temporaire. Cette unité est adaptée d'une part pour recevoir en entrée une image courante, c'est-à-dire une image à traiter, et des données de référence et d'autre part pour fournir en sortie un vecteur de mouvement temporaire relativement à l'image courante en fonction des données reçues en entrée. Comme déjà précisé précédemment, le vecteur de mouvement temporaire est déterminé en fonction des données de référence, et la présente invention couvre toute méthode permettant une telle détermination.

Un tel dispositif comprend également une unité de sélection d'image 705 adaptée pour sélectionner une image dans la séquence d'images captées et la fournir à l'unité de détermination 704, en tant qu'image courante.

Il comprend aussi une unité de sélection de données de référence 701 adaptée pour sélectionner des données de référence parmi des données stockées dans une mémoire 702. Dans un mode de réalisation de la présente invention, les données stockées dans une telle mémoire sont des données relatives à des images de la séquence d'images déjà traitées, c'est-à-dire auxquelles un vecteur de mouvement a déjà été associé.

Ce dispositif comprend également une unité de contrôle 703 adaptée pour recevoir un vecteur de mouvement temporaire fourni par l'unité de détermination. En fonction du résultat d'un tel contrôle sur le vecteur de mouvement temporaire, des opérations différentes sont effectuées. Ainsi, si le vecteur de mouvement temporaire vérifie un critère de fiabilité, l'image courante est associée au vecteur de mouvement temporaire, et cette association est alors stockée dans la mémoire 702. L'image courante devient alors une image traitée par le procédé selon un mode de réalisation de la présente invention.

En revanche, si le vecteur de mouvement temporaire ne vérifie pas le critère de fiabilité, on fournit alors, à l'unité de détermination 704, une autre image sélectionnée dans la séquence d'images captées par l'unité de sélection d'image 705.

Ainsi, dans un tel cas, l'unité de détermination est en mesure de déterminer, en fonction des mêmes données de référence que celles utilisées dans la précédente détermination d'un vecteur de mouvement temporaire, un vecteur de mouvement temporaire relativement à l'image courante nouvellement sélectionnée.

Ainsi, si le vecteur de mouvement temporaire ne vérifie pas le critère de fiabilité, l'unité de sélection d'image 705 sélectionne l'image qui suit, dans la séquence d'images, l'image courante précédemment considérée. En revanche, dans ce cas, l'unité de sélection de données de référence 701 ne sélectionne pas de données de référence différentes, qui ne fournit donc pas de nouvelles données à l'unité de détermination 704.

Lorsqu'une image est associée à un vecteur de mouvement, vérifiant donc le critère de fiabilité, l'unité de sélection d'image 705 sélectionne l'image qui suit l'image qui vient d'être associée à un vecteur de mouvement et la fournit à l'unité de détermination. Dans un tel cas, l'unité de sélection de données de référence 701 sélectionne dans la mémoire 702 des données de référence correspondant à l'image qui vient d'être associée à un vecteur de mouvement.

Ainsi, l'unité de détermination recevant en entrée ces données de référence sélectionnées par l'unité de sélection 701 et l'image sélectionnée par l'unité de sélection 705, est en mesure de déterminer un nouveau vecteur de mouvement temporaire et de le fournir à l'unité de contrôle qui le traite de la manière décrite ci-dessus.

De préférence, l'unité de sélection d'image 705 sélectionne successivement les images de la séquence d'images.

De préférence, l'unité de sélection de données de référence 701 sélectionne la dernière image associée à un vecteur de mouvement stockée dans la mémoire 702.

L'unité de contrôle décide que le vecteur de mouvement temporaire vérifie le critère de fiabilité si une norme du vecteur de mouvement temporaire est supérieure à une valeur de seuil.

L'invention permet une estimation de mouvement plus précise et de ce fait un meilleur rendu du mouvement du pointeur de la souris optique sur un écran, notamment dans le cas de mouvements rapides de la souris. Elle peut avantageusement mise en oeuvre dans tout procédé d'estimation de mouvement. Elle peut être mise en oeuvre facilement et à un coût raisonnable.

**Revendications**

1. Procédé de détection de déplacement d'une entité pourvue d'un capteur de séquence d'images à traiter, ledit procédé comprenant les étapes suivantes :

   /a/ déterminer (203) un vecteur de mouvement temporaire relativement à une image courante en fonction de données de référence comprenant une image précédente et un vecteur de mouvement associé à ladite image précédente;
   /b/ si le vecteur de mouvement temporaire ne vérifie pas un critère de fiabilité (204), répéter l'étape /a/ relativement à une image suivante, sur la base des mêmes dites données de référence ; sinon

/c/ associer (205) le vecteur de mouvement temporaire à l'image courante.

2. Procédé selon la revendication 1, suivant lequel un vecteur de mouvement temporaire vérifie le critère de fiabilité si la norme dudit vecteur est supérieure à une valeur de seuil.

3. Procédé selon l'une quelconque des revendications précédentes, suivant lequel, après l'étape /c/, on réalise les étapes /a/ et /b/, relativement à une image courante suivant l'image courante précédente dans la séquence d'images en fonction de données de référence correspondantes à l'image courante précédente.

4. Procédé selon l'une quelconque des revendications précédentes, suivant lequel l'étape /a/ comprend les étapes consistant à :

/1/ générer (43) k vecteurs candidats en ajoutant, à un vecteur de mouvement de référence, respectivement k vecteurs de recherche ;
/2/ sélectionner (44) un vecteur de mouvement parmi lesdits k vecteurs candidats en fonction d'une règle de sélection donnée ;
/3/ répéter m fols les deux étapes précédentes, ledit vecteur de mouvement de référence étant d'une part, pour une première itération de l'étape /1/, un vecteur de référence initial sélectionné parmi un ensemble de vecteurs comprenant au moins un vecteur de mouvement associé à une image traitée précédente et étant d'autre part, pour les m répétitions de l'étape /1/, le vecteur de mouvement sélectionné à l'étape /2/ précédant ladite étape /1/ et obtenir un vecteur de mouvement temporaire ;

m étant un entier supérieur ou égal à 1 et k étant un entier strictement supérieur à 1.

5. Procédé selon la revendication 4, suivant lequel une direction d'un premier et d'un deuxième vecteurs de recherche est horizontale, et une direction d'un troisième et d'un quatrième vecteurs de recherche est verticale ; les premier et deuxième vecteurs de recherche d'une part, et les troisième et quatrième vecteurs de recherche d'autre part, étant de sens respectifs opposés.

6. Procédé selon la revendication 4 ou 5, suivant lequel une amplitude des vecteurs de recherche correspondant à la première itération de l'étape /1/est déterminée en sélectionnant la plus grande valeur parmi une valeur de seuil donnée, une composante horizontale divisée par deux et une composante verticale divisée par deux du vecteur de mouvement associé à l'image traitée précédente.

7. Procédé selon l'une quelconque des revendications 4 à 6, suivant lequel une amplitude des vecteurs de recherche correspondant à une répétition de l'étape /1/ est déterminée en sélectionnant la plus grande valeur parmi une valeur de seuil donnée, une composante horizontale divisée par deux et une composante verticale divisée par deux du vecteur de recherche correspondant au vecteur de mouvement sélectionné à l'étape /2/ précédant ladite étape /1/.

8. Procédé selon l'une quelconque des revendications 4 à 7, suivant lequel la règle de sélection appliquée à l'étape /2/ est basée sur un calcul de corrélation d'un premier bloc de pixels dans l'image en cours de traitement et d'un second bloc de pixels dans l'image traitée précédente à partir duquel le vecteur candidat pointe le premier bloc de pixels, le vecteur candidat permettant une corrélation la plus élevée étant sélectionné.

9. Procédé selon l'une quelconque des revendications 4 à 8, suivant lequel l'ensemble de vecteurs de mouvement parmi lesquels le vecteur de mouvement de référence est sélectionné pour la première itération de l'étape /1/ comprend en outre le vecteur nul.

10. Dispositif de détection de déplacement d'une entité pourvue d'un capteur mobile de séquence d'images à traiter comprenant :

- une unité de détermination (704) de vecteur de mouvement temporaire adaptée pour recevoir en entrée une image courante et des données de référence et pour fournir en sortie un vecteur de mouvement temporaire relativement à ladite image courante, ledit vecteur de mouvement étant déterminé en fonction desdites données de référence ;
- une unité de contrôle (703) adaptée pour recevoir un vecteur de mouvement temporaire fourni par ladite unité de détermination, et pour, d'une part, stocker dans une mémoire (702) l'image courante associée au vecteur de mouvement temporaire si ledit vecteur de mouvement temporaire vérifie un critère de fiabilité, et, d'autre part, fournir une autre image courante à l'unité de détermination via une unité de sélection d'image (705) si le vecteur de mouvement temporaire ne vérifie pas le critère de fiabilité, ladite autre image courante correspondant à l'image suivante dans la séquence d'images à traiter;

- ladite mémoire (702) adaptée pour stocker une image et un vecteur de mouvement associé à ladite image ;
- une unité de sélection d'image (705) adaptée pour sélectionner une image dans la séquence d'images captées et pour fournir ladite image à ladite unité de détermination (704) ; et
- une unité de sélection de données de référence (701) adaptée pour sélectionner des données de référence comprenant l'image sélectionnée et le vecteur de mouvement associé et pour fournir lesdites données de référence sélectionnées à l'unité de détermination après chaque stockage de données dans la mémoire (702).

11. Dispositif selon la revendication 10, dans lequel l'unité de contrôle décide que le vecteur de mouvement temporaire vérifie le critère de flabilité si une norme du vecteur de mouvement temporaire est supérieure à une valeur de seuil.

12. Dispositif selon la revendication 10 ou 11, dans lequel l'unité de sélection d'image (705) est adaptée pour sélectionner l'image suivant l'image sélectionnée précédente.

13. Souris optique comprenant un capteur mobile d'images adaptée pour coopérer avec un dispositif de détection de déplacement selon l'une quelconque des revendications 10 à 12.

14. Produit «programme d'ordinateur » chargeable directement dans la mémoire interne d'un ordinateur numérique, comprenant des portions de code de logiciel pour l'exécution des étapes du procédé selon l'une quelconque des revendications 1 à 9.

**Claims**

1. Method for detecting the motion of an entity equipped with a sensor capturing a sequence of images to be processed, the said method comprising the following steps:

   /a/ determining (203) a temporary motion vector relating to a current image as a function of reference data comprising a preceding image and a motion vector associated to said preceding image;
   /b/ if the temporary motion vector does not satisfy a reliability criterion (204), repeating step /a/ relating to a following image, on the basis of the said reference data; otherwise
   /c/ associating (205) the temporary motion vector with the current image.

2. The method of Claim 1, wherein a temporary motion vector satisfies the reliability criterion if the magnitude of the said vector is greater than a threshold value.

3. The method of any one of the preceding claims, wherein, following step /c/, steps /a/ and /b/ are carried out in relation to a current image following the preceding current image in the sequence of images as a function of reference data corresponding to the preceding current image.

4. The method of any one of the preceding claims, wherein step /a/comprises the steps consisting in:

   /1/ generating (43) k candidate vectors by adding k respective search vectors to a reference motion vector;
   /2/ selecting (44) one motion vector from amongst the said k candidate vectors as a function of a given selection rule;
   /3/ repeating the two preceding steps m times, the said reference motion vector being, on the one hand, for a first iteration of step /1/, an initial reference vector selected from amongst a set of vectors comprising at least one motion vector associated with a preceding processed image and being, on the other hand, for the m repetitions of the step /1/, the motion vector selected at step /2/preceding the said step /1/ and obtaining a temporary motion vector;

   m being an integer greater than or equal to 1 and k being an integer strictly greater than 1.

5. The method of Claim 4, wherein the direction of a first and of a second search vector is horizontal, and the direction of a third and of a fourth search vector is vertical; the first and second search vectors, on the one hand, and the third and fourth search vectors, on the other, being of respective opposing senses.

**EP 1 746 486 B1**

**6.** The method of claims 4 and 5, wherein the amplitude of the search vectors corresponding to the first iteration of step /1/ is determined by selecting the highest value from amongst a given threshold value, a horizontal component divided by two and a vertical component divided by two of the motion vector associated with the preceding processed image.

**7.** The method of any one of Claims 4 to 6, wherein the amplitude of the search vectors corresponding to a repetition of step /1/ is determined by selecting the highest value from amongst a given threshold value, a horizontal component divided by two and a vertical component divided by two of the search vector corresponding to the motion vector selected at step /2/ preceding the said step /1/.

**8.** The method of any one of Claims 4 to 7, wherein the selection rule applied to step /2/ is based on a correlation calculation of a first block of pixels within the image being processed and of a second block of pixels within the preceding processed image starting from which the candidate vector points to the first block of pixels, the candidate vector that allows the highest correlation being selected.

**9.** The method of any one of Claims 4 to 8, wherein the set of motion vectors from amongst which the reference motion vector is selected for the first iteration of step /1/ also comprises the zero vector.

**10.** Device for detecting the movement of an entity equipped with a mobile sensor comprising:

- a unit for determination (704) of a temporary motion vector designed to receive a current image and reference data at its input and to deliver a temporary motion vector relating to the said current image at its output, the said motion vector being determined as a function of the said reference data;
- a test unit (703) designed to receive a temporary motion vector supplied by the said determination unit and, on the one hand, to store the current image associated with the temporary motion vector in a memory (702) if the said temporary motion vector satisfies a reliability criterion and, on the other, to supply another current image to the determination unit via an image selection unit (705) if the temporary motion vector does not satisfy the reliability criterion;
- the said memory (702) designed to store one image and one motion vector associated with the said image;
- an image selection unit (705) designed to select an image within the sequence of captured images and to supply the said image to the said determination unit (704); and
- a reference data selection unit (701) designed to select reference data comprising the selected image and the associated motion vector and to deliver said selected reference data to the unit for determination after each data storage in the memory (702).

**11.** The device of Claim 11, wherein the control unit decides that the temporary motion vector satisfies the reliability criterion if the magnitude of the temporary motion vector is greater than a threshold value.

**12.** The device of Claims 11 and 12, wherein the reference data selection unit is designed to select reference data comprising the image and the associated motion vector and to supply the said selected reference data to the determination unit following each storing of data in the memory.

**13.** The device of any one of Claims 11 to 13, wherein the image selection unit is designed to select the image following the preceding selected image.

**14.** Optical mouse comprising a mobile image sensor designed to co-operate with a motion estimation device of any one of Claims 11 to 14.

**15.** Computer program product, which can be directly loaded into the internal memory of a digital computer, comprising portions of software code for the execution of the steps of the method of any one of Claims 1 to 10.

**Patentansprüche**

**1.** Verfahren zum Erfassen einer Verschiebung einer Einheit, die mit einem Sensor für eine zu verarbeitende Folge von Bildern versehen ist, wobei das Verfahren die folgenden Schritte aufweist:

a) Bestimmen (203) eines temporären Bewegungsvektors in Bezug auf ein derzeitiges Bild abhängig von Re-

13

ferenzdaten, die ein vorangehendes Bild und einen dem vorangehenden Bild zugeordneten Bewegungsvektor aufweisen;
b) Wiederholen des Schritts a) in Bezug auf ein folgendes Bild auf der Basis der gleichen Referenzdaten, falls der temporäre Bewegungsvektor ein Zuverlässigkeitskriterium nicht erfüllt (204); ansonsten
c) Zuordnen (205) des temporären Bewegungsvektors zu dem derzeitigen Bild.

2. Verfahren nach Anspruch 1, wobei ein temporärer Bewegungsvektor das Zuverlässigkeitskriterium erfüllt, falls die Norm des Vektors größer als ein Schwellenwert ist.

3. Verfahren nach einem der vorstehenden Ansprüche, wobei nach dem Schritt c) die Schritte a) und b) in Bezug auf ein derzeitiges Bild, das dem vorangehenden derzeitigen Bild in der Folge von Bildern folgt, in Abhängigkeit der Referenzdaten ausgeführt werden, die dem vorangehenden derzeitigen Bild entsprechen.

4. Verfahren nach einem der vorstehenden Ansprüche, wobei der Schritt a) die folgenden Schritte aufweist:

   1) Erzeugen (43) von k Kandidatenvektoren, indem zu einem Referenzbewegungsvektor jeweils k Suchvektoren hinzugefügt werden;
   2) Auswählen (44) eines Bewegungsvektors unter den k Kandidatenvektoren abhängig von einer gegebenen Auswahlregel;
   3) m-maliges Wiederholen der zwei vorangehenden Schritte, wobei der Referenzbewegungsvektor einerseits für eine erste Iteration des Schritts 1) ein anfänglicher Referenzvektor ist, der aus einer Gesamtheit an Vektoren ausgewählt wird, die mindestens einen einem vorher verarbeiteten Bild zugeordneten Bewegungsvektor aufweist, und andererseits für die m Wiederholungen des Schritts 1) der Bewegungsvektor ist, der im Schritt 2) vor dem Schritt 1) ausgewählt wurde, und Erhalten eines temporären Bewegungsvektors;

   wobei m eine ganze Zahl größer oder gleich 1 ist und k eine ganze Zahl größer 1 ist.

5. Verfahren nach Anspruch 4, wobei eine Richtung eines ersten und eines zweiten Suchvektors horizontal ist, und eine Richtung eines dritten und eines vierten Suchvektors vertikal ist;
   wobei die ersten und zweiten Suchvektoren einerseits, und die dritten und vierten Suchvektoren andererseits in jeweils entgegengesetzte Richtungen verlaufen.

6. Verfahren nach Anspruch 4 oder 5, wobei eine Amplitude der Suchvektoren entsprechend der ersten Iteration des Schritts 1) bestimmt wird, indem der größte Wert unter einem gegebenen Schwellenwert, einer durch zwei geteilten horizontalen Komponente und einer durch zwei geteilten vertikalen Komponente des dem vorher verarbeiteten Bild zugeordneten Bewegungsvektors ausgewählt wird.

7. Verfahren nach einem der Ansprüche 4 bis 6, wobei eine Amplitude der Suchvektoren entsprechend einer Wiederholung des Schritts 1) bestimmt wird, indem der größte Wert unter einem gegebenen Schwellenwert, einer durch zwei geteilten horizontalen Komponente und einer durch zwei geteilten vertikalen Komponente des Suchvektors, der dem Bewegungsvektor entspricht, der im Schritt 2) vor dem Schritt 1) ausgewählt wurde, ausgewählt wird.

8. Verfahren nach einem der Ansprüche 4 bis 7, wobei die in dem Schritt 2) angewendete Auswahlregel auf einer Korrelationsberechnung eines ersten Pixelblocks in dem in Verarbeitung befindlichen Bild und eines zweiten Pixelblocks in dem vorher verarbeiteten Bild basiert, von dem der Kandidatenvektor auf den ersten Pixelblock zeigt, wobei der Kandidatenvektor ausgewählt wird, der die höchste Korrelation aufweist.

9. Verfahren nach einem der Ansprüche 4 bis 8, wobei die Gesamtheit an Bewegungsvektoren, aus welchen der Referenzbewegungsvektor für die erste Iteration des Schritts 1) ausgewählt wird, zudem den Nullvektor aufweist.

10. Vorrichtung zur Erfassung einer Verschiebung einer Einheit, die mit einem mobilen Sensor für eine zu verarbeitende Folge von Bildern versehen ist, wobei die Vorrichtung Folgendes aufweist:

   eine Bestimmungseinheit (704) eines temporären Bewegungsvektors, die angepasst ist, um eingangsseitig ein derzeitiges Bild und Referenzdaten zu empfangen, und um ausgangsseitig einen temporären Bewegungsvektor in Bezug auf ein derzeitiges Bild bereitzustellen, wobei der Bewegungsvektor abhängig von den Referenzdaten bestimmt wird;
   eine Steuereinheit (703), die angepasst ist, um einen temporären Bewegungsvektor zu empfangen, der durch die Bestimmungseinheit bereitgestellt wird, und um einerseits das dem temporären Bewegungsvektor zugeordnete derzeitige Bild in einen Speicher (702) zu speichern, falls der temporäre Bewegungsvektor ein Zuverlässigkeitskriterium erfüllt, und um andererseits ein anderes derzeitiges Bild der Bestimmungseinheit über eine Bildauswahleinheit (705) bereitzustellen, falls der temporäre Bewegungsvektor das Zuverlässigkeitskriterium nicht erfüllt, wobei das andere derzeitige Bild einem Folgebild in der zu verarbeitenden Folge von Bildern entspricht;

wobei der Speicher (702) angepasst ist, um ein Bild und einen dem Bild zugeordneten Bewegungsvektor zu speichern;

eine Bildauswahleinheit (705), die angepasst ist, um ein Bild in der Folge von empfangenen Bildern auszuwählen und um das Bild der Bestimmungseinheit (704) bereitzustellen; und

eine Referenzdatenauswahleinheit (701), die angepasst ist, um die Referenzdaten auszuwählen, welche das ausgewählte Bild und den zugeordneten Bewegungsvektor aufweisen, und um die ausgewählten Referenzdaten der Bestimmungseinheit nach jeder Datenspeicherung in den Speicher (702) bereitzustellen.

11. Vorrichtung nach Anspruch 10, wobei die Steuereinheit entscheidet, dass der temporäre Bewegungsvektor das Zuverlässigkeitskriterium erfüllt, falls eine Norm des temporären Bewegungsvektors größer als ein Schwellenwert ist.

12. Vorrichtung nach Anspruch 10 oder 11, wobei die Bildauswahleinheit (705) angepasst ist, um das dem vorher ausgewählten Bild folgende Bild auszuwählen.

13. Optische Maus mit einem mobilen Sensor für Bilder, die angepasst ist, um mit einer Vorrichtung zur Erfassung einer Verschiebung nach einem der Ansprüche 10 bis 12 zu kooperieren.

14. Rechnerprogrammprodukt, das direkt in den internen Speicher eines Digitalrechners ladbar ist, mit Softwarecodeanteilen zum Ausführen der Verfahrensschritte nach einem der Ansprüche 1 bis 9.

FIG.1B.

FIG.1A.

FIG.2.

Block 201: i = j = 0

Block 202: i = i+1

Block 203: DÉTERMINER UN VECTEUR DE MOUVEMENT TEMPORAIRE POUR IMAGE i EN FONCTION DE DONNÉES DE RÉFÉRENCE CORRESPONDANT À IMAGE j

Decision 204: VECTEUR FIABLE ? — NON / OUI

Block 205: ASSOCIER IMAGE i ET LE VECTEUR DE MOUVEMENT j = i

| 1 | 2 | 3 | 4 | 5 | 6 | 7 | 8 | 9 | 10 | 11 | 12 | 13 | 14 | 15 | 16 |

—31

| 0 | 0 | 0 | 0 | 4 | 4 | 4 | 4 | 8 | 8 | 8 | 8 | 12 | 12 | 12 | 12 |

—32

| 8 | 16 | 24 | 32 | 8 | 16 | 24 | 32 | 8 | 16 | 24 | 32 | 8 | 16 | 24 | 32 |

—33

| 0 | 0 | 0 | 32 | 0 | 0 | 0 | 32 | 0 | 0 | 0 | 32 | 0 | 0 | 0 | 32 |

→34

## FIG.3.

VECTEUR DE RÉFÉRENCE
INITIAL
x = 0
—41

x = x + 1 —42

GÉNÉRER n VECTEURS CANDIDATS
EN AJOUTANT AU VECTEUR DE
RÉFÉRENCE n VECTEURS DE
RECHERCHE
—43

—203

SÉLECTIONNER UN VECTEUR DE
MOUVEMENT PARMI LES VECTEURS
CANDIDATS
—44

NON

x = m + 1
?
—45

## FIG.4.

FIG.5.

| APPLIQUER VECTEUR NUL ET CALCULER CORRÉLATION |—502

| MÉMORISER RÉSULTAT 1 |—503

| APPLIQUER VECTEUR ASSOCIÉ À IMAGE PRÉCÉDENTE ET CALCULER CORRÉLATION |—503

| MÉMORISER RÉSULTAT 2 |—505

| SÉLECTIONNER VECTEUR DE RÉFÉRENCE SUR LA BASE D'UNE COMPARAISON DES RÉSULTAT 1 ET RÉSULTAT 2 |—506

FIG.6.

407  406  409  410

408
402
403
401

413
411
412
414
404
405

701

UNITÉ DE SÉLECTION DE
DONNÉES DE RÉFÉRENCE

702

MÉMOIRE

704

UNITÉ DE
DÉTERMINATION

703

UNITÉ DE
CONTRÔLE

705

UNITÉ DE
SÉLECTION D'IMAGE

IMAGES CAPTÉES

FIG.7.

## RÉFÉRENCES CITÉES DANS LA DESCRIPTION

**Documents brevets cités dans la description**

- US 6256016 B1
- US 20040100444 A1